Europäisches Patentamt

European Patent Office

Office européen des brevets

(19)

(11) Numéro de publication : **0 448 449 A1**

# (12) DEMANDE DE BREVET EUROPEEN

(21) Numéro de dépôt : 91400706.7

(22) Date de dépôt : 15.03.91

(51) Int. Cl.$^5$ : **H04N 7/00**

(30) Priorité : 20.03.90 FR 9003549

(43) Date de publication de la demande :
25.09.91 Bulletin 91/39

(84) Etats contractants désignés :
DE GB

(71) Demandeur : **ETAT FRANCAIS représenté par le Ministre des Postes, Télécommunications et de l'Espace
(CENTRE NATIONAL D'ETUDES DES TELECOMMUNICATIONS), 38-40 rue du Général Leclerc
F-92131 Issy-les-Moulineaux (FR)
Demandeur : TELEDIFFUSION DE FRANCE
10, rue d'Oradour sur Glane
F-75015 Paris (FR)**

(72) Inventeur : **Bernard, Philippe
175, rue de Belle Epine
F-35510 Cesson Sevigne (FR)**

(74) Mandataire : **Fréchède, Michel et al
Cabinet Plasseraud 84, rue d'Amsterdam
F-75009 Paris (FR)**

(54) Procédé et système d'estimation de mouvement pour des images de télévision numérique haute définition.

(57)    L'invention concerne un procédé et un système d'estimation de mouvement pour images de télévision numérique haute définition.

Le mouvement est estimé pour un bloc courant Bc des trames paires $T_{2k}$, 2r-1 des images impaires auxquelles sont associés n vecteurs de mouvement, au bloc courant Bc des trames paires $T_{2k}$, 2r des images paires étant associé, par adressage relatif, un vecteur mouvement par rapport à s vecteurs de l'image précédente $I_{2r-1}$ entourant l'image B'c du bloc courant Bc. Les s vecteurs sont choisis en éliminant les redondances de vecteurs parmi les n vecteurs.

Application à la diffusion et à la transmission de signaux numériques de télévision par canal HD-MAC ou HD-MAC BE en bande étroite.

EP 0 448 449 A1

FIG.1b.

# PROCEDE ET SYSTEME D'ESTIMATION DE MOUVEMENT POUR DES IMAGES DE TELEVISION NUMERIQUE HAUTE DEFINITION

L'invention est relative à un procédé et à un système d'estimation de mouvement pour des images de télévision numérique haute définition.

Actuellement, la diffusion et la transmission des images de télévision numérique haute définition font l'objet d'études dans le cadre du projet EUREKA 95 au sein duquel les divers partenaires ont pour objectif l'établissement de normes de diffusion et de transmission de ces images de façon à préserver, vis-à-vis des matériels existants ou prochainement mis en service tels que les systèmes de diffusion et de transmission par satellites de type D MAC ou D2 MAC, un maximum de compatibilité.

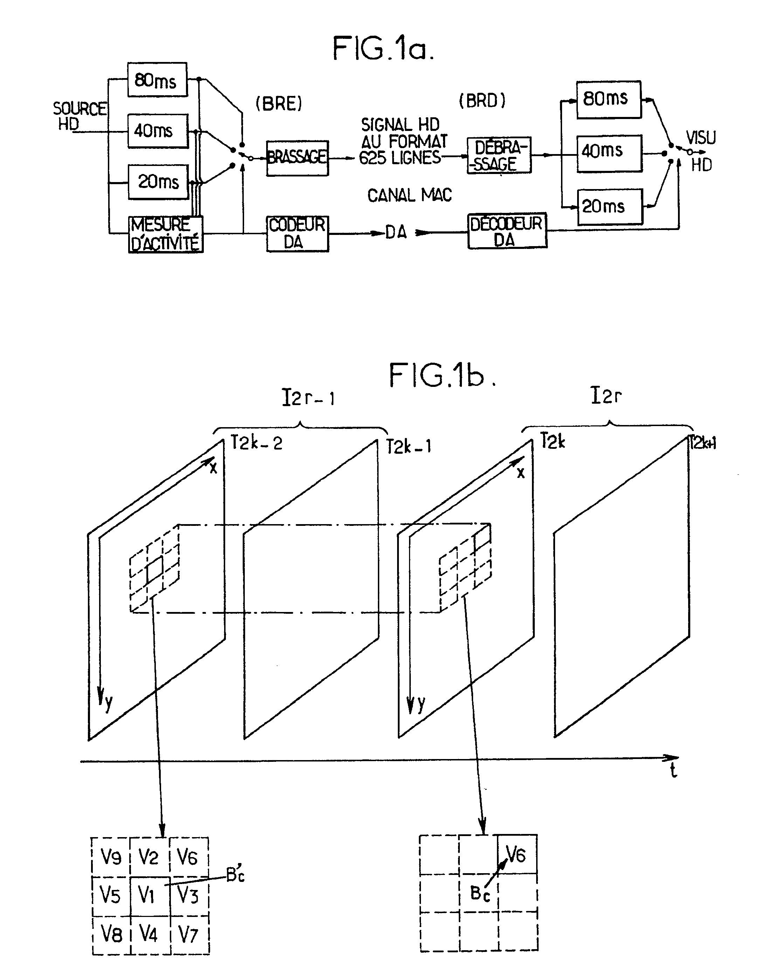

Lors de la diffusion et de la transmission, par voie de satellite, de signaux d'images de télévision numérique haute définition, selon le protocole HD-MAC, un multiplexage temporel des données de composante de luminance et de chrominance et des données de son est effectué sur une trame de transmission. Outre les données précitées, le multiplex comporte également des données d'assistance DATV (Digitally Assisted TV), lesquelles ont pour objet de transmettre l'information relative à l'activité, ou mouvement, dans chaque image, du codeur HD-MAC au décodeur HD-MAC. Ces données d'assistance sont transmises par le canal HD-MAC pendant les intervalles de suppression verticale du multiplex HD-MAC, avec un débit maximum de 1 M bit/s et correspondant à une fréquence d'échantillonnage de 20,25 MHz. Confer figure 1a.

Plus récemment, et en vue d'assurer une meilleure compatibilité tant avec les nouveaux standards proposés de diffusion et de transmission d'images de télévision numérique haute définition, qu'avec les matériels existants, il a été proposé un nouveau standard d'émission, c'est-à-dire de diffusion et de transmission, d'images numériques de télévision haute définition de type HD-MAC en bande étroite et désigné ci-après par HD-MAC BE. Le standard d'émission en bande étroite se caractérise par une fréquence d'échantillonnage en transmission ramenée de 13,5 MHz à 9 MHz, en bande de base de luminance soit dans un rapport 2/3, par compression horizontale des lignes d'image obtenue par décimation. L'émission selon le standard précité permet, outre la compatibilité précédemment mentionnée, de restituer, après décodage, des images utiles proches de la qualité haute définition au prix d'une dégradation de définition acceptable.

Pour une description plus complète de ce type de standard d'émission HD-MAC en bande étroite, on pourra se reporter à la demande de brevet français intitulée "Procédé et dispositif de codage-décodage d'un signal numérique de télévision haute définition en bande étroite" déposée le même jour que la présente demande au nom de la demanderesse sous le numéro 90 03548.

En outre, l'utilisation du standard HD-MAC BE à la réception, c'est-à-dire au niveau du décodeur HD-MAC restituteur de bande BRD, par compression de bande par sous-échantillonnage, le signal transmis numérique de télévision étant ainsi ramené à un signal correspondant à une fréquence de 9 MHz en bande de base de luminance, a été décrite dans la demande de brevet français n° 89 16860 déposée le 15/12/89 au nom de la demanderesse.

La mise en oeuvre et l'utilisation d'un standard de type HD-MAC BE, en raison de la réduction de la largeur de bande du signal utile, en bande de base, dans le rapport des fréquences d'échantillonnage implique, nécessairement, une réduction correspondante du débit des données d'assistance DATV.

Ainsi, pour une transmission des données d'assistance DATV avec une fréquence d'échantillonnage réduite à 2/3, soit à une fréquence de 13,5 MHz, au lieu de 20,25 MHz, la transmission des données d'assistance permet, au plus, de véhiculer, sur 20 lignes de suppression de trame par trame d'image, l'équivalent de 714 points par ligne d'image sur 40 lignes de suppression de trame, à raison de 25 trames de transmission MAC par seconde, soit 714 Kbit/s.

Il est en conséquence nécessaire de réduire à une telle valeur le débit de transmission des données d'assistance DATV et bien entendu, la quantité d'information relative au mouvement, par unité de temps, afin de permettre une commutation correspondante des voies d'échantillonnage 20 ms, 40 ms, et 80 ms au niveau du décodeur HD-MAC restituteur de bande BRD.

Afin de mieux définir l'objectif d'une telle réduction, un rappel préliminaire des principes d'estimation de mouvement dans un système de type HD-MAC sera décrit en liaison avec les figures 1a et 1b.

Sur la figure 1a, on a représenté, de manière schématique, un ensemble codeur réducteur de bande décodeur restituteur de bande formant un canal de type HD-MAC. Un filtrage spatio-temporel du signal numérique HD, au niveau du BRE, avec une constante de temps de 80 ms pour les zones fixes de l'image, 20 ms pour les zones mobiles et 40 ms pour les zones intermédiaires est effectué sur commutation à partir d'un critère de mesure d'activité de chaque image, le critère d'activité de l'image courante et un vecteur mouvement par blocs, pour un bloc courant de cette image, étant codés sous forme de données d'assistance TV et transmis, par le canal HD-MAC, vers le décodeur BRD.

Sur décodage des données d'assistance, un filtrage spatio-temporel correspondant, au niveau du BRD, est effectué par commutation en sortie de filtres 80 ms, 20 ms et 40 ms.

Afin d'assurer l'estimation de mouvement, la technique actuelle consiste, sur une durée périodique de 80 ms, à définir les différentes successions de situation d'activités suivantes, sur deux images successives, image impaire $I_{2r-1}$, image paire $I_{2r}$.

| Image $I_{2r-1}$ | Image $I_{2r}$ |
|---|---|
| 80 ms | 80 ms |
| 40 ms | 40 ms |
| 40 ms | 20 ms |
| 20 ms | 40 ms |
| 20 ms | 20 ms |

Lorsque le mode de filtrage spatio-temporel effectif, sur commutation, correspond à une constante de temps de 40 ms, le vecteur mouvement associé est transmis. Dans la voie de filtrage 40 ms les échantillons représentatifs des vecteurs mouvement de trame paire $T_{2k}$, 2r ou $T_{2k-2}$, 2r-1 des images paires $I_{2r}$ ou impaires $I_{2r-1}$, sont transmis, sachant que la trame paire $T_{2k}$, 2r est calculée par compensation de mouvement à partir des deux trames impaires adjacentes $T_{2k-1}$, 2r-1 et $T_{2k+1}$, 2r voisines où l'indice $\underline{r}$ désigne les indices d'images et l'indice $\underline{k}$ les indices de trames. L'estimation du mouvement se décompose alors en deux phases, l'une pour les trames paires des images impaires $T_{2k-2}$, 2r-1 et l'autre pour les trames paires des images paires $T_{2k}$, 2r. Un ensemble de 169 vecteurs mouvement possibles pour un bloc courant Bc constitué de 16x16 pixels est alors retenu, par décalages possibles en x,y de ce bloc de 13x13 pas, entre ± 6, sur l'image désentrelacées pour la trame paire de l'image impaire $T_{2k-2}$, 2r-1. Selon une technique de corrélation par bloc (bloc matching method) selon cette technique, l'erreur quadratique moyenne de position minimale permet par exemple de définir le vecteur mouvement pour le bloc Bc considéré.

Par contre le vecteur mouvement du bloc courant Bc de la trame paire de l'image paire $T_{2k}$, 2r est obtenu par adressage relatif par rapport aux neuf blocs de l'image impaire précédente $T_{2k-2}$, 2r-1 entourant le bloc courant Bc et définissant neuf vecteurs, une technique de corrélation par bloc étant appliquée à ces neufs vecteurs. Ces neuf vecteurs sont par exemple définis par les valeurs d'adressage relatif V1 correspondant au bloc et au bloc courant Bc, V2 à V9 par exemple. Ainsi que représenté en figure 1b, à l'instant 2r d'occurence de la trame paire $T_{2k}$, 2r de l'image $I_{2r}$ le bloc courant Bc a migré par exemple en une position adjacente correspondant à V6 par rapport à la position antérieure à l'instant 2k-2, 2r-1 de la trame paire de l'image impaire $I_{2r-1}$, cette position correspondant à l'image B'c du bloc courant Bc sur cette image antérieure.

Pour une image complète, constituée d'une trame paire et d'une trame impaire, le nombre de cas possibles de vecteurs mouvement pour un bloc courant Bc s'écrit :

| Image 2r-1 | Image 2r | |
|---|---|---|
| 80 ms | 80 ms | 1X1 |
| 40 ms | 40 ms | 169x9 |
| 40 ms | 20 ms | 169x1 |
| 20 ms | 40 ms | 1x8 |
| 20 ms | 20 ms | 1x1 |

soit 1 700 possibilités de vecteur mouvement, lesquelles peuvent être codées sur 11 bits.

Le débit total pour une image comportant 90 blocs par ligne d'image à raison de 72 blocs par hauteur d'image à une fréquence d'image de 12,5 Hz en filtrage à 80 ms, sur un codage sur 11 bits est donc égal à

EP 0 448 449 A1

891 Kbits, ce qui, compte tenu des protections contre les erreurs de codage nécessite un débit de 1 Mbits/s.

Pour ramener le débit d'information des données d'assistance DATV de 1 Mbits/s à 0,7 Mbits/s, afin d'assurer la diffusion et la transmission du signal de télévision numérique haute définition en bande étroite, HD-MAC BE, on peut envisager de conserver le nombre de pixels de 16x16 constituant les blocs de décision dans le contexte de la demande de brevet intitulée "Procédé et dispositif de codage-décodage d'un signal numérique de télévision haute définition en bande étroite". Bien que le débit d'information codée, pour chaque trame de transmission, soit ainsi réduit, en proportion puisque seules les informations de données d'assistances de la partie utile centrée par l'image sont transmises, une telle solution n'est pas entièrement satisfaisante car, à la réception, au niveau du décodeur restituteur de bande BRD, il est nécessaire de garder une certaine taille horizontale après reconstitution de bande, suite à décompression par extension horizontale dans un rapport 3/2, conversion finale dans le rapport des fréquences d'échantillonnage 36 MHz T 54 MHz, cette solution ramène la taille des blocs visuellement observés à la restitution à l'équivalent de 24 pixels en horizontal par 16 lignes en vertical à une fréquence de 54 MHz.

Un objet de la présente invention est, en conséquence, la mise en oeuvre d'un procédé et d'un système d'estimation de mouvement pour des images de télévision numérique permettant la réduction du débit d'information de données d'assistance DATV, sans modification des dimensions horizontale ou verticale des blocs de décision, après extension horizontale dans le rapport 3/2 : par exemple des blocs 12 en horizontal par 16 en vertical dans le contexte de la demande de brevet précitée "Procédé et dispositif de codage-décodage d'un signal numérique de télévision haute définition en bande étroite".

Un autre objet de la présente invention est également la mise en oeuvre d'un procédé et d'un système d'estimation de mouvement pour des images de télévision numérique lequel, bien que permettant la réduction du débit de diffusion et de transmission des données d'assistance DATV, permettent cependant de conserver une compatibilité vis-à-vis des canaux de diffusion et de transmission de type HD-MAC, le procédé et le système d'estimation de mouvement pour des images de télévision numérique, selon l'invention, pouvant de ce fait trouver application, soit dans le cadre des canaux de type HD-MAC, soit dans le cadre des canaux de type HD-MAC BE à diffusion-émission en bande étroite.

Le procédé d'estimation de mouvement pour des images de télévision numérique haute définition soumises à un traitement de sous-échantillonnage spatio-temporel de type HD-MAC, objet de la présente invention, ce mouvement étant estimé, pour la trame paire de chaque image constituée d'une trame paire et d'une trame impaire, à partir de l'estimation de mouvement des trames impaires adjacentes antérieure et postérieure, au bloc courant Bc des trames paires $T_{2k-2}$, 2r-1 des images impaires $I_{2r-1}$ étant associés $\underline{N}$ vecteurs de mouvement et au bloc courant Bc des trames paires $T_{2k}$, 2r des images paires $I_{2r}$ étant associé un vecteur mouvement obtenu par rapport à $\underline{n}$ vecteurs de l'image précédente $I_{2r-1}$ définis par les blocs adjacents au bloc courant considéré est remarquable en ce que cet adressage relatif est effectué par rapport à $\underline{s}$ vecteurs, s<n, de l'image précédente $I_{2r-1}$ entourant l'image du bloc courant Bc considéré. Les $\underline{s}$ vecteurs sont choisis en éliminant les redondances de vecteurs parmi les $\underline{n}$ vecteurs.

Le système d'estimation de mouvement pour des images de télévision numérique haute définition soumises à un traitement de sous-échantillonnage spatio-temporel de type HD-MAC, objet de la présente invention, ce mouvement étant estimé, pour la trame paire de chaque image constituée d'une trame paire et d'une trame impaire, à partir de l'estimation de mouvement des trames impaires adjacentes antérieure et postérieure, au bloc courant Bc des trames paires $T_{2k-2}$, 2r-1 des images impaires $I_{2r-1}$ étant associés $\underline{N}$ vecteurs de mouvement et au bloc courant Bc des trames paires $T_{2k}$, 2r des images paires $I_{2r}$ étant associé un vecteur mouvement obtenu par rapport à $\underline{n}$ vecteurs de l'image précédente $I_{2r-1}$ définis par des blocs adjacents à l'image du bloc courant Bc considéré est remarquable en ce qu'il comprend des moyens de classement desdits $\underline{n}$ vecteurs, ledit classement consistant à ordonner lesdits $\underline{n}$ vecteurs selon une séquence déterminée, et des moyens de tri desdits vecteurs ordonnés de façon à supprimer parmi lesdits $\underline{n}$ vecteurs tout vecteur redondant d'ordre $\underline{p}$, avec $\underline{p}$ inférieur à $\underline{n}$, vis-à-vis du sous-ensemble desdits p-1 vecteurs antérieurs, pour établir un ensemble de vecteurs non redondants. Des moyens de sélection des $\underline{s}$ premiers vecteurs parmi l'ensemble de vecteurs non redondants sont prévus pour établir une base de référence à partir de laquelle l'adressage relatif du bloc courant Bc de la trame paire $T_{2k}$, 2r de l'image paire $I_{2r}$ est effectué.

Une description plus détaillée du procédé et du système objets de la présente invention sera donnée ci-après dans la description et les dessins dans lesquels, outre les figures 1a et 1b relatives à l'art antérieur,

– la figure 2a représente un schéma illustratif de la mise en oeuvre du procédé objet de la présente invention,

– la figure 2b représente un schéma illustratif de mise en oeuvre d'un premier détail de réalisation du procédé objet de la présente invention,

– la figure 2c représente un schéma illustratif de mise en oeuvre d'un deuxième détail de réalisation du procédé objet de la présente invention,

5

– la figure 3 représente un schéma fonctionnel relatif à un système d'estimation de mouvement pour des images de télévision numérique haute définition conforme à l'objet de la présente invention.

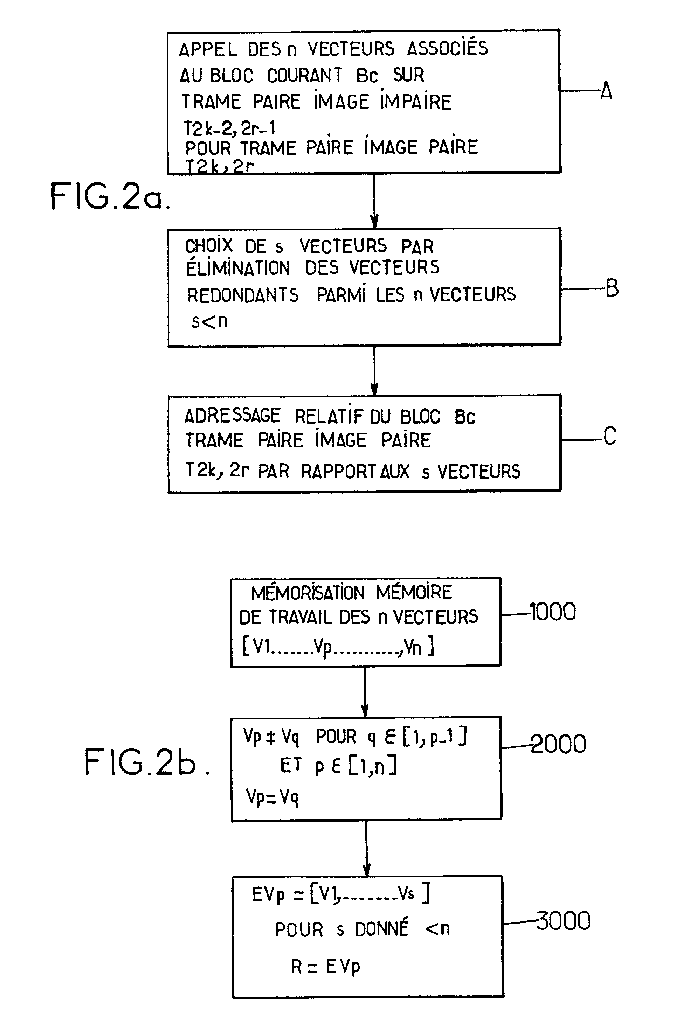

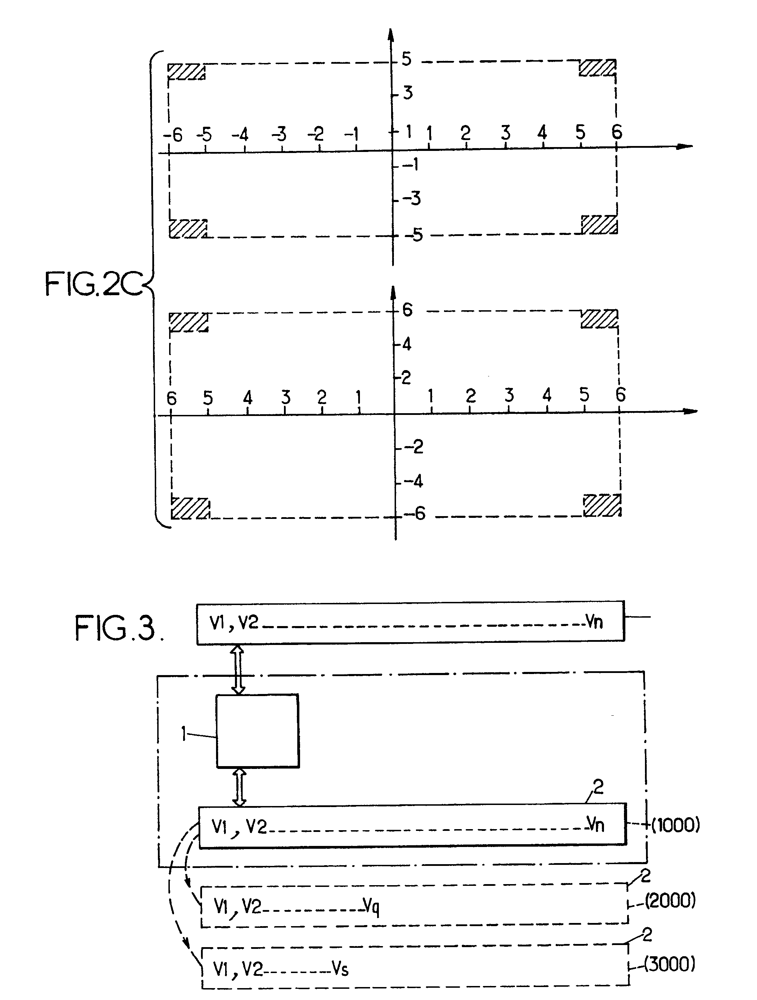

Une description plus détaillée du procédé d'estimation de mouvement pour des images de télévision numérique haute définition objet de l'invention sera maintenant donnée en liaison avec les figures 1b, 2a et 2b.

Ainsi qu'on l'a représenté en figure 1b, le procédé d'estimation de mouvement, objet de l'invention, pour images de télévision numérique haute définition met en oeuvre pour la trame paire de chaque image constituée d'une trame paire et d'une trame impaire, à partir de l'estimation de mouvement des trames impaires adjacentes antérieure et postérieure, les trames $T_{2k}$, 2r et $T_{2k-2}$, 2r-1 représentées sur la figure 1b, une procédure par corrélation de blocs, le bloc courant étant noté Bc.

A partir de l'estimation de mouvement à partir des trames impaires adjacentes antérieure et postérieure $T_{2k-1}$, 2r-1 et $T_{2k+1}$, 2r, au bloc courant Bc des trames paires $T_{2k}$, 2r-1 des images impaires $I_{2r-1}$ sont associés $\underline{N}$ vecteurs de mouvement, le nombre $\underline{N}$ étant pris égal conformément à la technique antérieure à 169.

Au bloc courant Bc des trames paires $T_{2k}$, 2r des images paires $I_{2r}$ est associé par adressage relatif un vecteur mouvement obtenu par rapport à $\underline{n}$ vecteurs de l'image précédente noté $I_{2r-1}$. On notera que les $\underline{n}$ vecteurs de l'image précédente sont par exemple définis par les blocs adjacents à l'image du bloc courant Bc considéré sur cette image, ce bloc de pixels étant susceptible d'être reconnu par la valeur des composantes de luminance et de chrominance par exemple qui sont affectées à chacun d'eux.

Selon une caractéristique avantageuse du procédé objet de l'invention, l'adressage relatif précité est effectué par rapport à $\underline{s}$ vecteurs, $\underline{s}$ étant inférieur à $\underline{n}$, de l'image précédente notée $I_{2r-1}$. Ces $\underline{n}$ vecteurs entourent l'image B'c du bloc courant Bc et correspondent à des positions préférentielles de déplacement du bloc Bc courant précité.

Selon une caractéristique avantageuse du procédé objet de l'invention, les $\underline{s}$ vecteurs sont choisis en éliminant les redondances de vecteurs parmi les $\underline{n}$ vecteurs précités.

Selon une caractéristique avantageuse non limitative du procédé objet de l'invention, le nombre $\underline{s}$ de vecteurs de l'image précédente $I_{2r-1}$ est pris égal à cinq, s = 5.

Ainsi qu'on l'a représenté sur le diagramme fonctionnel de la figure 2a, le procédé objet de l'invention comporte les étapes essentielles ci-après.

L'étape A consistant en un appel des $\underline{n}$ vecteurs associés au bloc courant Bc sur la trame paire de l'image impaire notée $T_{2k-2}$, 2r-1 pour la trame paire de l'image paire $T_{2k}$, 2r. On comprendra ainsi que l'étape A précitée pour le bloc courant Bc précédemment mentionné consiste ainsi, à partir des $\underline{n}$ vecteurs mentionnés, ces vecteurs correspondant par exemple à la position du bloc Bc considéré pour le vecteur V1 ainsi que représenté en figure 1b et à des vecteurs V2 à V9 correspondant à des positions adjacentes au bloc Bc considéré constituent en fait une première base de référence réduite de positionnement du bloc courant Bc dans la trame paire de l'image paire $T_{2k}$, 2r ultérieure par rapport à laquelle la position du bloc courant Bc, mobile, sera exprimée.

Conformément au procédé objet de la présente invention, celui-ci comporte alors l'étape B telle que représentée en figure 2a, laquelle a pour objet le choix de $\underline{s}$ vecteurs parmi les $\underline{n}$ vecteurs précédemment définis, ce choix étant effectué par élimination des vecteurs redondants parmi les $\underline{n}$ vecteurs précités.

On comprendra bien entendu que la mesure précédente permet tout en diminuant la quantité, et donc le débit d'information à coder, de conserver la dimension des blocs de décision tels que le bloc Bc.

L'étape B précitée est alors suivie, pour la trame paire de l'image paire $T_{2k}$, 2r à effectuer, après reconnaissance du bloc Bc considéré par comparaison des valeurs de luminance et de chrominance attribuées aux pixels constituant ce dernier, à repérer la position de ce bloc courant Bc dans le deuxième référentiel constitué par les $\underline{s}$ vecteurs dans lesquels les vecteurs redondants ont été supprimés.

Une description plus détaillée des étapes essentielles précédemment citées, et en particulier de la mise en oeuvre de celles-ci, sera donnée en liaison avec la figure 2b, laquelle décrit les procédures successives pouvant être mises en oeuvre afin d'assurer la conduction des étapes A, B et C décrite précédemment en figure 2a.

Ainsi, l'étape A précédemment mentionnée peut être mise en oeuvre au moyen d'une procédure de mémorisation en mémoire de travail de $\underline{n}$ vecteurs notés V1, Vp, Vn, un classement des $\underline{n}$ vecteurs de l'image $I_{2r-1}$ étant effectué de façon à ordonner ces $\underline{n}$ vecteurs selon une séquence déterminée pour établir un ensemble de vecteurs ordonnés.

Puis l'étape B peut être mise en oeuvre au moyen d'un processus de tri parmi l'ensemble de vecteurs ordonnés en supprimant tout vecteur redondant d'ordre $\underline{p}$, pour p < n vis-à-vis du sous-ensemble des p-1 vecteurs antérieurs pour établir un ensemble de vecteurs non redondants.

L'étape C peut ensuite être mise en oeuvre au moyen d'une procédure de sélection des $\underline{s}$ premiers vecteurs ordonnés, procédure notée 3000, pour établir la deuxième base ou référentiel à partir de laquelle l'adressage relatif du bloc courant Bc de la trame paire $T_{2k}$, 2r de l'image paire $I_{2r}$ sera ensuite effectué. Sur la figure 2b, le référentiel $\underline{R}$ est noté comme constitué de l'ensemble des $\underline{s}$ vecteurs.

En ce qui concerne le processus noté 1000 tel que représenté en figure 2b, on notera que de préférence, l'ordre de mémorisation des vecteurs et finalement le classement des $\underline{n}$ vecteurs précités est choisi de façon à mémoriser successivement le vecteur mouvement V1 de l'image B'c du bloc courant Bc dans l'image impaire $I_{2r-1}$ sur la trame paire $T_{2k-2}$ puis successivement les vecteurs mouvement correspondant à des positions spatiales les plus probables c'est-à-dire les vecteurs V2, V3, V4, V5 puis V6, V7, V8, V9 correspondant respectivement d'une part aux positions latérale, verticale, horizontale, verticale, horizontale par rapport à l'image B'c du bloc courant puis les positions diagonales V6, V7, V8, V9, ces positions diagonales étant en principe moins probables.

En ce qui concerne le processus de tri, tel que représenté à l'étape 2000 celui-ci peut être réalisé selon la loi indiquée en supprimant alors tout vecteur redondant d'ordre $\underline{p}$ avec $p < n$ vis-à-vis des sous-ensembles des p-1 vecteurs antérieurs pour établir un ensemble de vecteurs non redondants.

Enfin la sélection des $\underline{s}$ premiers vecteurs, les vecteurs redondants ayant été supprimés, est alors effectuée selon le processus en 3000 pour établir la deuxième base de référence à partir de laquelle l'adressage relatif du bloc courant Bc de la trame paire $T_{2k}$, 2r de l'image paire $I_{2r}$ est effectué.

Selon un autre aspect particulièrement avantageux du procédé objet de l'invention, ainsi qu'il sera décrit en outre en liaison avec la figure 2c, les vecteurs mouvement de chaque image impaire $I_{2r-1}$ sont quantifiés en direction horizontale et verticale par rapport à une grille bidimensionnelle sur l'ensemble de la dimension de l'image, dimension horizontale et dimension verticale, cette grille de quantification présentant de manière préférentielle un pas de quantification horizontal ph = 1 et un pas de quantification vertical pv = 2. De manière avantageuse, les vecteurs mouvement des angles de l'image sont exclus.

Ainsi qu'on l'a représenté en figure 2c, le pas de quantification vertical pv = 2 est choisi pour des valeurs de seuil de quantification sur la dimension verticale essentiellement impaire. Dans ce cas, les valeurs retenues, ainsi que représentées sur la figure précitée, comportent les valeurs :

$$-5 ; -3 ; -1 ; 0 ; 1 ; 3 ; 5.$$

Selon un autre mode de réalisation représenté en figure 2c, le pas de quantification vertical égal à 2 est choisi parmi des valeurs de seuil de quantification de valeur paire. Dans ce deuxième cas, les valeurs de seuil de quantification sont égales à :

$$-6 ; -4 ; -2 ; 0 ; 2 ; 4 ; 6.$$

On notera que la première solution des valeurs de seuil de quantification des vecteurs mouvements dans lesquels les valeurs de quantification sont impaires est plus avantageuse que la deuxième, car elle permet de réduire la complexité matérielle du codeur réducteur de bande et du décodeur restituteur de bande dans la mesure où il n'est plus nécessaire de désentrelacer l'image source haute définition pour obtenir deux images progressives aux instants T-1 et T+1 de part et d'autre de la trame courante, sauf calcul de la ligne centrale.

Une description d'un mode de réalisation non limitatif d'un système d'estimation de mouvement pour des images de télévision numérique haute définition conformes à l'objet de la présente invention sera maintenant donnée en liaison avec la figure 3.

Bien entendu, le système d'estimation de mouvement objet de la présente invention est destiné à être utilisé au niveau d'un codeur réducteur de bande BRE d'un canal de type HD-MAC ou d'un canal de type HD-MAC BE de diffusion et de transmission en bande étroite. A ce titre, le système objet de l'invention, dans le mode de réalisation tel que représenté en figure 3, comporte avantageusement les éléments contenus dans l'aire délimitée par le rectangle en traits mixtes.

En conséquence, on considère que le mouvement pour le bloc courant Bc est estimé pour la trame paire de chaque image constituée d'une trame paire et d'une trame impaire, à partir de l'estimation de mouvement des trames impaires adjacentes antérieure et postérieure $\underline{N}$ vecteurs de mouvement $T_{2k-2}$, 2r-1 des images impaires $I_{2r-1}$ et au bloc courant Bc des trames paires $T_{2k}$, 2r des images paires $I_{2r}$ étant associé un vecteur mouvement obtenu à partir des $\underline{n}$ vecteurs de l'image précédente $I_{2r-1}$.

Ainsi, le codeur réducteur de bande comprend de manière classique une unité de mémorisation notée $\underline{A}$ laquelle à proprement parler ne fait pas partie de l'objet du système d'estimation de mouvement objet de la présente invention.

Selon le mode de réalisation de la figure 3, le système objet de l'invention comporte un calculateur rapide 1 et un circuit de mémorisation 2 permettant la mémorisation séquentielle de l'ensemble des vecteurs calculés conformément au processus objet de l'invention tel que représenté par exemple en figure 2b.

On comprendra ainsi que le calculateur rapide 1 auquel est associé par exemple un programme de mémorisation des $\underline{n}$ vecteurs permettant la conduite du processus 1000 représenté en figure 2b, constitue ainsi un moyen de classement de ces $\underline{n}$ vecteurs selon le critère indiqué précédemment dans la description afin d'obtenir l'ensemble de $\underline{n}$ vecteurs ordonnés.

On comprendra alors que l'unité de mémorisation 2, laquelle peut présenter une capacité de mémorisation semblable à l'unité de mémorisation A contenue dans le système existant du codeur réducteur de bande BRE, fonctionne alors en mémoire de travail, de type mémoire vive. Celle-ci permet d'assurer la mémorisation des vecteurs ordonnés ainsi que représentés en figure 3.

On comprendra en outre que le même calculateur rapide 1 associé à un programme de calcul de tri sur les critères indiqués relativement au processus représenté en 2000 en figure 2b permet de constituer un moyen de tri des vecteurs ordonnés de façon à supprimer parmi ces vecteurs ordonnés tout vecteur d'ordre $\underline{p}$, pour $p < n$, vis-à-vis du sous-ensemble des p-1 vecteurs antérieurs pour établir l'ensemble de vecteurs non redondants. Sur la figure 3 on a représenté en pointillés, à l'extérieur du périmètre rectangulaire en traits mixtes précité, l'état de l'unité de mémorisation 2 dans laquelle, suite à la mise en oeuvre de la procédure de tri selon le processus noté 2000 de la figure 2b, l'ensemble des vecteurs non redondants a été mémorisé.

On comprendra enfin que le circuit calculateur rapide 1 associé à une procédure de sélection des $\underline{s}$ premiers vecteurs ordonnés non redondants obtenus suite à la procédure selon le processus 2000 précité permet de constituer la deuxième base de référence à partir de laquelle l'adressage relatif du bloc courant Bc de la trame paire $T_{2k}$, 2r de l'image paire $I_{2r}$ est effectué.

Sur la figure 3 on a également représenté en traits pointillés l'état de mémorisation de la deuxième base de référence constituée par les $\underline{s}$ vecteurs non redondants, ces vecteurs étant alors mémorisés et stockés dans l'unité de mémorisation 2.

Bien entendu, le circuit calculateur rapide 1 permet ensuite d'effacer l'unité de mémorisation A du codeur réducteur de bande BRE et d'inscrire dans cette unité de mémorisation la deuxième base de référence par rapport à laquelle l'adressage relatif sera ainsi effectué à partir de la deuxième base de référence réduite.

On comprendra bien sûr qu'en ce qui concerne les procédures permettant la conduite des processus représentés aux étapes 1000, 2000 et 3000 de la figure 2b, celles-ci peuvent consister en des programmes correspondants, écrits par exemple en langage procéduraux et normalement inscrits en mémoire morte, le contenu des mémoires mortes pouvant être chargé dans la mémoire de travail constituée par l'unité de mémorisation 2 par exemple, afin d'accélérer la vitesse de traitement.

On comprendra également que le circuit calculateur rapide 1 peut avantageusement, être constitué par le circuit calculateur déjà présent au niveau du codeur réducteur de bande BRE, seule une adaptation logiciel étant nécessaire.

On a ainsi décrit un procédé et un dispositif d'estimation de mouvement particulièrement avantageux dans la mesure où le débit de transmission des données d'assistance DATV entre le codeur réducteur et le décodeur restituteur de bande d'un canal de type HD-MAC ou HD-MAC BE de diffusion transmission en bande étroite peut ainsi être réduit dans le rapport indiqué précédemment. On notera en particulier que le processus d'adressage relatif mis en jeu par rapport à un nombre de vecteurs réduit repose sensiblement sur un calcul de coût de type corrélation de mouvement c'est-à-dire bloc matching (simple) en qu'en conséquence celui-ci permet de répondre aux spécifications définies par les canaux de type HD-MAC ou HD-MAC BE en bande étroite.

**Revendications**

1. Procédé d'estimation de mouvement pour des images de télévision numérique haute définition soumises à un traitement de sous-échantillonnage spatio-temporel de type HD-MAC, ce mouvement étant estimé, pour la trame paire de chaque image constituée d'une trame paire et d'une trame impaire, à partir de l'estimation de mouvement des trames impaires adjacentes antérieure et postérieure, au bloc courant Bc des trames paires $T_{2k}$, 2r-1 des images impaires $I_{2r-1}$ étant associés $\underline{N}$ vecteurs de mouvement et au bloc courant Bc des trames paires $T_{2k}$, 2r des images paires $I_{2r}$ étant associé, par adressage relatif, un vecteur mouvement obtenu par rapport à n vecteurs de l'image précédente $I_{2r-1}$ définis par des blocs adjacents à l'image du bloc courant Bc considéré, caractérisé en ce que ledit adressage relatif est effectué par rapport à $\underline{s}$ vecteurs, s < n, de l'image précédente $I_{2r-1}$ entourant l'image B'c du bloc courant Bc, lesdits $\underline{s}$ vecteurs étant choisis en éliminant les redondances de vecteurs parmi les $\underline{n}$ vecteurs, les $\underline{s}$ vecteurs étant obtenus en effectuant :

   – un classement des $\underline{n}$ vecteurs de l'image précédente $I_{2r-1}$, de façon à ordonner lesdits $\underline{n}$ vecteurs selon une séquence déterminée, pour établir un ensemble de vecteurs ordonnés ;
   – un tri parmi l'ensemble de vecteurs ordonnés en supprimant tout vecteur redondant d'ordre $\underline{p}$, avec $p < n$ ; vis-à-vis du sous-ensemble desdits p-1 vecteurs antérieurs pour établir un ensemble de vecteurs non redondants ;
   – une sélection des $\underline{s}$ premiers vecteurs ordonnés pour établir une deuxième base de référence à partir de laquelle l'adressage relatif du bloc courant Bc de la trame paire $T_{2k}$, 2r de l'image paire $I_{2r}$ est effectué.

2. Procédé selon la revendication 1, caractérisé en ce que le nombre $\underline{s}$ de vecteurs de l'image précédente

$I_{2r-1}$ est pris égal à cinq, s = 5.

3. Procédé selon l'une des revendications 1 ou 2, caractérisé en ce que lesdits vecteurs mouvement de chaque image impaire $I_{2r-1}$ sont quantifiés en module et direction par rapport à une grille bidimentionnelle sur l'ensemble de la dimension de l'image, ladite grille de quantification présentant un pas de quantification horizontal ph = 1 et un pas de quantification vertical pv = 2, les vecteurs mouvement des angles de l'image étant exclus.

4. Procédé selon la revendication 3, caractérisé en ce que ladite grille de quantification comporte, selon la dimension verticale, des seuils de quantification de valeur paire :
-6 ; -4 ; -2 ; 0 ; +2 ; +4 ; +6
la valeur zéro correspondant à la ligne centrale de l'image.

5. Procédé selon la revendication 3, caractérisé en ce que ladite grille de quantification comporte, selon la dimension verticale, des seuils de quantification de valeur impaire :
-5 ; -3 ; -1 ; 0 ; +1 ; +3 ; +5.

6. Système d'estimation de mouvement pour des images de télévision numérique haute définition soumises à un traitement de sous-échantillonnage spatio-temporel de type HD-MAC, ce mouvement étant estimé, pour la trame paire de chaque image constituée d'une trame paire et d'une trame impaire, à partir de l'estimation de mouvement des trames impaires adjacentes antérieure et postérieure, au bloc courant Bc des trames paires $T_{2k-2}$, 2r-1 des images impaires $I_{2r-1}$ étant associés $\underline{N}$ vecteurs de mouvement et au bloc courant Bc des trames paires $T_{2k}$, 2r des images paires $I_{2r}$ étant associé un vecteur mouvement obtenu par rapport à n vecteurs de l'image précédente $I_{2r-1}$ définis par des blocs adjacents à l'image B'c du bloc courant Bc considéré, caractérisé en ce qu'il comprend :
   – des moyens de classement desdits $\underline{n}$ vecteurs, ce classement consistant à ordonner lesdits $\underline{n}$ vecteurs selon une séquence déterminée, pour établir un ensemble de vecteurs ordonnés ;
   – des moyens de tri desdits vecteurs ordonnés de façon à supprimer parmi lesdits vecteurs ordonnés tout vecteur redondant d'ordre $\underline{p}$, avec $\underline{p}$ inférieur à $\underline{n}$, vis-à-vis du sous-ensemble desdits p-1 vecteurs antérieurs pour établir un ensemble de vecteurs non redondants ;
   – des moyens de sélection des $\underline{s}$ premiers vecteurs parmi l'ensemble des vecteurs non redondants pour établir une deuxième base de référence à partir de laquelle l'adressage relatif du bloc courant Bc de la trame paire $T_{2k}$, 2r de l'image paire $I_{2r}$ est effectué.

7. Système selon la revendication 6, caractérisé en ce que lesdits moyens de classement desdits $\underline{n}$ vecteurs, les moyens de tri des vecteurs ordonnés et les moyens de sélection des $\underline{s}$ premiers vecteurs comportent :
   – un calculateur rapide (1) permettant d'assurer le calcul et la gestion des vecteurs ordonnés, des vecteurs non redondants et des vecteurs constituant la deuxième base de référence,
   – des moyens (2) de mémorisation permettant la mémorisation séquentielle des vecteurs ordonnés, des vecteurs non redondants et des vecteurs constituant la deuxième base de référence.

8. Système selon la revendication 7, caractérisé en ce que ledit calculateur comporte implanté en mémoire de travail :
   – un programme de classement desdits $\underline{n}$ vecteurs,
   – un programme de tri des vecteurs ordonnés, par suppression des vecteurs redondants,
   – un programme de sélection des $\underline{s}$ premiers vecteurs non redondants.

# FIG.1a.

# FIG.1b.

FIG.2a.

APPEL DES n VECTEURS ASSOCIÉS
AU BLOC COURANT Bc SUR
TRAME PAIRE IMAGE IMPAIRE
$T2k-2,2r-1$
POUR TRAME PAIRE IMAGE PAIRE
$T2k,2r$

— A

CHOIX DE s VECTEURS PAR
ÉLIMINATION DES VECTEURS
REDONDANTS PARMI LES n VECTEURS
$s<n$

— B

ADRESSAGE RELATIF DU BLOC Bc
TRAME PAIRE IMAGE PAIRE
$T2k,2r$ PAR RAPPORT AUX s VECTEURS

— C

MÉMORISATION MÉMOIRE
DE TRAVAIL DES n VECTEURS
$[V1........Vp............,Vn]$

— 1000

FIG.2b.

$Vp \neq Vq$ POUR $q \in [1, p-1]$
ET $p \in [1,n]$
$Vp = Vq$

— 2000

$EVp = [V1,--------Vs]$
POUR s DONNÉ $<n$
$R = EVp$

— 3000

FIG.2C {

FIG.3.

**Europäisches Patentamt**

# EUROPÄISCHER RECHERCHENBERICHT

Nummer der Anmeldung

EP 91 40 0706

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 347 984 (L.E.P.) <br> * Le document en entier * <br> --- | 1,3,6 | H 04 N 7/00 |
| A | BBC RESEARCH DEPARTMENT REPORT, no. 11, septembre 1987, pages 1-20, Tadworth, GB; G.A. THOMAS et al.: "Television motion measurement for DATV and other applications" <br> * Page 12, colonne de droite, ligne 29 - page 13, colonne de gauche, ligne 7 * <br> --- | 1,6,8 | |
| A | EP-A-0 342 756 (L.E.P.) <br> * Page 1, ligne 1 - page 2, ligne 23; page 4, ligne 8 - page 7, ligne 47 * <br> --- | 1,3,6-8 | |
| A | EP-A-0 294 956 (SONY CORP.) <br> * Colonne 19, ligne 36 - colonne 20, ligne 26 * <br> --- | 1,6 | |
| A | FR-A-2 628 864 (C.N.E.T. ET T.D.F.) <br> * Abrégé * <br> ----- | 1 | RECHERCHIERTE SACHGEBIETE (Int. Cl.5) <br><br> H 04 N |

Der vorliegende Recherchenbericht wurde für alle Patentansprüche erstellt

| Recherchenort | Abschlußdatum der Recherche | Prüfer |
|---|---|---|
| DEN HAAG | 04-06-1991 | BOSCH F.M.D. |

EPO FORM 1503 03.82 (P0403)